(19) Europäisches Patentamt
European Patent Office
Office européen des brevets

(11) **EP 1 317 616 B1**

(12) **EUROPÄISCHE PATENTSCHRIFT**

(45) Veröffentlichungstag und Bekanntmachung des Hinweises auf die Patenterteilung:
**12.08.2009 Patentblatt 2009/33**

(51) Int Cl.:
*F02D 41/14* (2006.01)    *F01N 9/00* (2006.01)
*F01N 3/20* (2006.01)

(21) Anmeldenummer: **01967020.7**

(22) Anmeldetag: **24.08.2001**

(86) Internationale Anmeldenummer:
**PCT/DE2001/003250**

(87) Internationale Veröffentlichungsnummer:
**WO 2002/020967 (14.03.2002 Gazette 2002/11)**

(54) **VERFAHREN ZUR NOx-MASSENSTROMBESTIMMUNG AUS KENNFELDDATEN BEI VARIABLER LUFTEINLASS-UND MOTORTEMPERATUR**

METHOD FOR DETERMINING NOX MASS FLOW FROM CHARACTERISTICS MAP DATA WITH A VARIABLE AIR INLET AND ENGINE TEMPERATURE

PROCEDE PERMETTANT DE DETERMINER LE DEBIT MASSIQUE DE NOX A PARTIR DES DONNEES CARACTERISTIQUES POUR UNE TEMPERATURE D'ENTREE D'AIR ET DU MOTEUR VARIABLE

(84) Benannte Vertragsstaaten:
**DE FR SE**

(30) Priorität: **04.09.2000 DE 10043690**

(43) Veröffentlichungstag der Anmeldung:
**11.06.2003 Patentblatt 2003/24**

(73) Patentinhaber: **ROBERT BOSCH GMBH**
**70442 Stuttgart (DE)**

(72) Erfinder:
• **SARHOLZ, Walter**
**70469 Stuttgart (DE)**
• **WINKLER, Klaus**
**71277 Rutesheim (DE)**

(56) Entgegenhaltungen:
**DE-A- 19 739 848**      **DE-A- 19 851 319**
**DE-C- 19 607 151**      **US-A- 4 291 659**
**US-A- 5 327 872**

**Beschreibung**

Stand der Technik

Aus der DE 1 97 39 848 ist bereites ein Verfahren zur Motorsteuerung für benzindirekteinspritzende Verbrennungsmotoren (BDE) mit NOx-Speicherkatalysatoren bekannt, das eine Modellierung des NOx-Speicherkatalysators und eine Steuerung und Regelung des Wechsels zwischen Speicher- und Regenerierbetrieb sowie eine Katalysatordiagnose vorsieht. Ein wesentliches Element ist die Berechnung des NOx-Rohmassenstroms am Katalysatoreingang aus Kennfelddaten über die Eingangsgrößen Motordrehzahl, relativer Kraftstoffmasseneintrag (bezogen auf Vollast), Abgasrückführungsanteil und Soll-Lambda.

Die Unterschiede in der Ansauglufttemperatur, z. B. -20°C im skandinavischen Winter und + 40°C im tropischen oder subtropischen Sommer, und in der Motorblocktemperatur, die z. B. beim Kaltstart der Außentemperatur entspricht und die bei Dauervollast bis in die Bereiche der maximal zulässigen Motoröltemperatur steigen kann, werden in der bekannten Berechnung nicht berücksichtigt.

In einer bekannten Steuerung für BDE-Motoren wird aus der Ansauglufttemperatur und der Motortemperatur eine für das eingeschlossene Gasgemisch zu Beginn der Kompression charakteristische Temperatur ermittelt (Tein). In EP-A-0 381 236 wird der Wasserdampfanteil der Ansaugluft berücksichtigt.

Vor diesem Hintergrund besteht die Aufgabe der Erfindung in einer Verbesserung der Modellierung des NOx-Rohmassenstrom am Katalysatoreingang.

Diese Aufgabe wird durch eine Berücksichtigung der Ansauglufttemperatur, der Motoröltemperatur und des Wasserdampfanteils bei der Modellierung gelöst, wobei der Wasserdampfanteil aus der Ansanglufttemperatur ermittelt wird.

Die Ansauglufttemperatur und die Motoröltemperatur stehen bei modernen Motorsteuerungen als Meßsignale zur Verfügung.

Erfindungsgemäß wird mit Hilfe dieser Daten und mit einem NOx-Emissionskennfeld über der Motordrehzahl, der relativen Kraftstoffmasse, der Abgasrückführrate und dem Soll-Lambdawert der NOx-Massenstroms am Katalysatoreingang genauer berechnet als bisher. Eine weitere Steigerung der Genauigkeit wird durch die Berücksichtigung des Wasserdampfgehalts der Ansaugluft ermöglicht.

Eine Ausführungsform der Erfindung sieht vor, daß der NOx-Massenstroms (msnovk) vor dem Katalysator berechnet wird als Produkt aus einem auf einen definierten Normzustand bezogenen Grundwert (msnovk0) und einem temperaturabhängigen Faktor (exp(FNOXBAKT*delTemv).

Eine weitere Ausführungsform sieht vor, daß der temperaturabhängige Faktor zu einer Änderung (delTemv) der Verbrennungstemperatur als Folge von Änderungen einer Einlaßtemperaturgröße (Tein), kombiniert aus Luft- und Motortemperatur proportional ist.

Eine weitere Ausführungsform sieht vor, daß die Berechnung des NOx-Massenstroms vor dem Katalysator bei einem Verbrennungsmotor, der in einer ersten Betriebsart mit geschichteter Gemischverteilung im Brennraum (Schichtbetrieb) und in einer zweiten Betriebsart mit homogener Gemischverteilung im Brennraum (Homogenbetrieb) betrieben werden kann, im Schichtbetrieb anders erfolgt als im Homogenbetrieb.

Gemäß einer weiteren Ausführungsform wird im Homogenbetrieb zusätzlich ein Faktor für eine Lambda-abhängige NOx-Bildungsaktivierung berücksichtigt.

Eine weitere Ausführungsform sieht vor, daß ein steigender Wasserdampfanteil an der Ansaugluft bei der Berechnung verkleinernd auf den NOx-Massenstrom vor dem Katalysator wirkt.

Die Erfindung richtet sich auch auf eine elektronische Steuereinrichtung, die die oben genannten Verfahren ausführt.

Der Formalismus der vorliegenden Erfindung ist so einfach strukturiert, daß er ohne große Probleme in eine Motorsteuerung integriert werden kann, ohne daß ein existierendes NOx-Emissionskennfeld zusätzlich für abweichende Ansaugluft- und Motortemperaturen implementiert werden muß. Mit anderen Worten: Ein auf einen Normzustand und/oder Abgastestbedingungen bezogenes Grundkennfeld kann weiter verwendet werden; Abweichungen des Ist-Zustandes von dem Normzustand werden durch Verknüpfung der Kennfeldwerte mit Korrekturwerten, insbesondere durch eine multiplikative Verknüpfung berücksichtigt.

Dadurch kann die Berechnung des NOx-Massenstroms schneller und mit weniger Speicherplatzverbrauch die gewünschten Zusatzinformationen liefern.

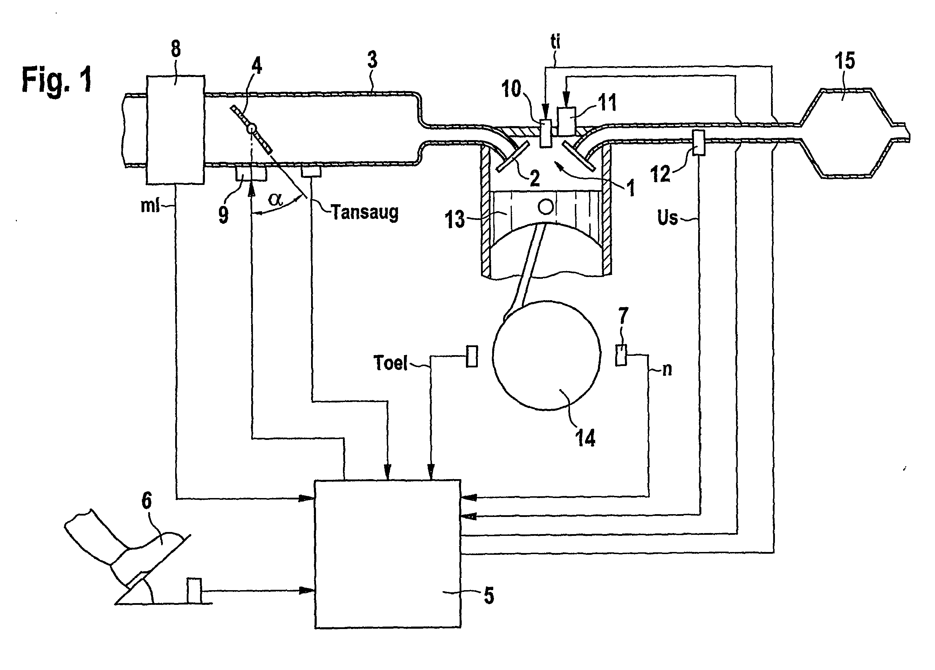

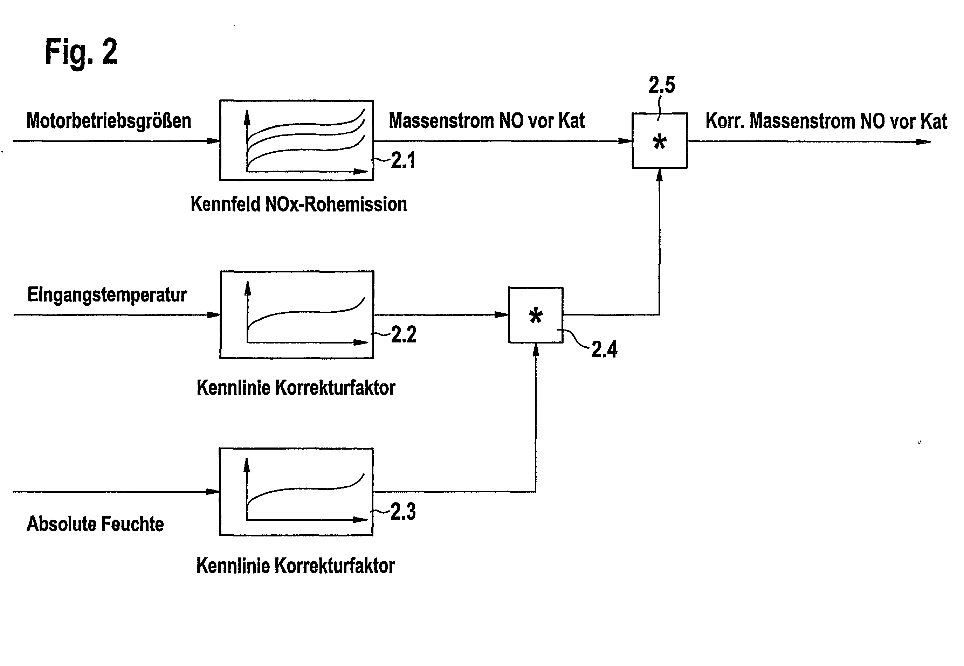

Fig. 1 zeigt das technische Umfeld der Erfindung. Die Fig. 2 bis 4 stellen Ausführungsbeispiele der Erfindung in der Darstellung von Funktionsblöcken dar.

Die 1 in der Fig. 1 repräsentiert den Brennraum eines Zylinders eines Verbrennungsmotors. Über ein Einlaßventil 2 wird der Zustrom von Luft zum Brennraum gesteuert. Die Luft wird über ein Saugrohr 3 angesaugt. Die Ansaugluftmenge kann über eine Drosselklappe 4 variiert werden, die von einem Steuergerät 5 angesteuert wird. Dem Steuergerät werden Signale über den Drehmomentwunsch des Fahrers, bspw. über die Stellung eines Fahrpedals 6, ein Signal über die Motordrehzahl n von einem Drehzahlgeber 7, ein Signal über die Menge ml der angesaugten Luft von einem Luftmengenmesser 8 und ein Signal Us über die Abgaszusammensetzung und/oder Abgastemperatur von einem Abgassensor 12 zugeführt. Abgassensor 12 kann beispielsweise eine Lambdasonde sein, deren Nernstspannung den Sauerstoffgehalt im Abgas angibt und deren Innenwiderstand als Maß für die Sonden-, Abgas- und/oder Katalysator-Temperatur herangezogen wird. Das Abgas wird durch wenigstens einen Katalysator 15 geführt, in dem Schadstoffe aus dem Abgas konvertiert und/oder vorübergehend gespeichert werden.

Aus diesen und ggf. weiteren Eingangssignalen über weitere Parameter des Verbrennungsmotors wie Ansaugluft- und Kühlmitteltemperatur und so weiter bildet das Steuergerät 5 Ausgangssignale zur Einstellung des Drosselklappenwinkels alpha durch ein Stellglied 9 und zur Ansteuerung eines Kraftstoffeinspritzventils 10, durch das Kraftstoff in den Brennraum des Motors dosiert wird. Außerdem wird durch das Steuergerät die Auslösung der Zündung über eine Zündeinrichtung 11 gesteuert.

Der Drosselklappenwinkel alpha und die Einspritzimpulsbreite ti sind wesentliche, aufeinander abzustimmende Stellgrößen zur Realisierung des gewünschten Drehmomentes, der Abgaszusammensetzung und der Abgastemperatur. Eine weitere wesentliche Stellgröße zur Beeinflussung dieser Größen ist die Winkellage der Zündung relativ zur Kolbenbewegung. Die Bestimmung der Stellgrößen zur Einstellung des Drehmomentes ist Gegenstand der DE 1 98 51 990, die insoweit in die Offenbarung einbezogen sein soll.

Weiterhin steuert das Steuergerät weitere Funktionen zur Erzielung einer effizienten Verbrennung des Kraftstoff/ Luftgemisches im Brennraum, beispielsweise eine nicht dargestellte Abgasrückführung und/oder Tankentlüftung. Die aus der Verbrennung resultierende Gaskraft wird durch Kolben 13 und Kurbeltrieb 14 in ein Drehmoment gewandelt.

Zur Modellierung des NOx-Eintrages in den Katalysator berechnet das Steuergerät bei Sauerstoffüberschuß im Abgas den Massenstrom mNox der Stickoxide zum Katalysator aus Betriebsparametern des Verbrennungsmotors. Dies kann beispielsweise durch Adressierung eines Kennfeldes geschehen, in dem die momentanen NOx-Emissionen betriebspunktabhängig gespeichert sind. Als wesentliche Betriebsparameter sind in diesem Zusammenhang die Motordrehzahl, die relative Kraftstoffmasse, die Abgasrückführrate und der Soll-Lambdawert zu nennen. Die Gesamtmenge an Stickoxiden, die in einer Magerphase emittiert wird, ergibt sich daraus durch Integration.

Einzelheiten einer Modellierung des aus der Verbrennung resultierenden NOx-Massenstroms sind in der DE 1 97 39 848 beschrieben, die insofern in die Offenbarung miteinbezogen sein soll.

Die im Rahmen der vorliegenden Erfindung verwendeten zusätzlichen Einflußgrößen Ansauglufttemperatur Tans und Motoröltemperatur Tmotor wirken sich auf die Verbrennungstemperatur des Kraftstoff-Luft-Gemischs aus, die über die NOx-Bildung im Mageren entscheidet. Unter diesen Bedingungen wird NO nach dem Zeldovich-Mechanismus (thermisches NO) gebildet. Mit den bekannten Aktivierungsenergien dieses Mechanismus läßt sich abschätzen, daß sich bei sonst gleichen Bedingungen der temperaturabhängige Exponentialterm eines Arrheniusansatzes für übliche Einlaßtemperaturen linearisieren läßt (Gl. 1). Zur Berücksichtigung starker Effekte wie z. B. bei hoher Luftfeuchtigkeit empfiehlt sich die Verwendung einer Kennlinie auf Basis der angegebenen Exponentialfunktion. In diesem Ansatz kann man den Einflußfaktor FNOXBAKT für die Wirkung der verschiedenen Temperaturen auf den NOx-Massenstrom für jeden Fahrzeugtyp anpassen. Damit wird der Formalismus auch unabhängig vom NOx-Bildungsmechanismus und gilt z. B. auch für das Prompt-NO, das sich (vorzugsweise im Fetten) z. B. mit deutlich kleinerer Aktivierungsenergie als das Zeldovich-NO bildet.

Zur Berechnung des NOx-Massenstroms vor Katalysator msnovk schlagen wir folgende Formeln vor (Gl. 1-2):

```
(1) msnovk = msnovk0 * exp(FNOXBAKT*delTemv)
```

(linearisiert: msnovk = msnovk0 * (1 + FNOXBAKT*delTemv) )

Dabei entspricht msnovk0 dem NOx-Massenstrom vor dem Katalysator aus dem genannten Kennfeld und FNOXBAKT entspricht einem Faktor, der die temperaturabhängige NOx-Bildungsaktivierung repräsentiert. Beispiel: FNOXBAKT = 0.003/Kelvin.

```
(2) delTemv = FT0_TV * (Tein - TBEZUG) - FTWASDA * antwasda
```

Dabei entspricht delTemv einer Änderung der Verbrennungstemperatur durch Einlaßeffekte. Tein repräsentiert eine Einlaßtemperaturgröße, kombiniert aus Luft- und Motortemperatur. TBEZUG entspricht einer Temperatur Tein, bei der das Kennfeld aufgenommen wurde. Falls TBEZUG für das Kennfeld nicht konstant ist, erfolgt die Bildung eines Mittelwertes und notfalls eine Rückrechnung einzelner Kennfeldpunkte auf diesen Mittelwert vor Einspeisung des Kennfelds in die Motorsteuerung. FT0_TV repräsentiert einen Verstärkungsfaktor für Auswirkungen von Tein-Änderungen auf die Verbrennungstemperatur. Beispiel: FT0_TV = 2.1. Die Größe antwasda gibt den Wasserdampfanteil an der Ansaugluft in Volumenprozent (absolut) an. Dabei kann es sich um eine Meßgröße handeln. Der Faktor FTWASDA gibt den Einfluß des Wasserdampfanteils auf die Verbrennungstemperatur an. Vorschlag: FTWASDA = 26.6. Die Größe Tans ist die gemessene Temperatur der Ansaugluft des Verbrennungsmotors und Tmotor ist die gemessene Motoröltemperatur.

Die Zahlenangaben beruhen auf groben Abschätzungen. Sie sind von Fall zu Fall an die Gegebenheiten eines konkreten Fahrzeugs anzupassen.

Im Schichtbetrieb wird davon ausgegangen, daß der Hauptanteil des NOx in einem lokalen Lambda-Bereich um den stöchiömetrischen Punkt (lambda = 1) gebildet wird, weil hier die höchsten Temperaturen auftreten. Ein solcher Bereich tritt bei Schichtladung unabhängig vom mittleren Lambda immer auf. Mit dem mittleren Lambda verändert sich nur seine räumliche Ausdehnung, deren Auswirkung bereits im Kennfeld berücksichtigt wird, während die Charakteristik der Temperaturabhängigkeit der NOx-Bildung wegen der Zuordnung zum lokalen Bereich mit Lambda in der Umgebung von 1 im wesentlichen unverändert bleibt. Deshalb soll FNOXBAKT als Parameter nach der Bedatung der Motorsteuerung für einen bestimmten Motor im Schichtbetrieb konstant bleiben (Gl. 1).

Bei homogener Verbrennung hängt die lokale Spitzentemperatur stark vom Kraftstoff/Luftverhältnis, das durch die Luftzahl Lambda charakterisiert ist, ab. Für diesen Fall wird Gl. 1 wegen der Temperaturabhängigkeit des Aktivierungsfaktors abgewandelt (Gl. 1a).

$$(1a) \quad msnovk = msnovk0 * \exp(FNOXBAKTL*lambda**2*delTemv)$$

Dabei stellt FNOXBAKTL einen Faktor für eine Lambda-abhängige NOx-Bildungsaktivierung dar. Beispiel: FNOXBAKTL = 0.003/K

Diese Formeln gehen von dem Kennfeld-NOx-Massenstrom msnovk0 aus und benutzen die Meßgrößen Ansauglufttemperatur Tans, Motoröltemperatur Tmotor und Wasserdampfanteil antwasda zur Modifikation der ausgelesenen Kennfeldwerte. Die Vorteile des vorhandenen Kennfelds bleiben erhalten (Gl. 1) und werden ergänzt durch eine einfach strukturierte Beschreibung des Einflusses der genannten Meßgrößen. Charakteristisch für das Verfahren ist die Bündelung aller Meßgrößen in der Hilfsgröße delTemv, die als Maß für die Erhöhung der Verbrennungsspitzentemperatur dienen soll (Gl. 2). Der Wasserdampfanteil antwasda der Ansaugluft wirkt als Wärmesenke und mindert bei konstantem Luftverhältnis die Verbrennungstemperatur im Vergleich zur trockenen Luft. Für den Fall, daß man den Wasserdampfanteil nicht mißt, kann folgende Überlegung dessen explizite Einbindung entbehrlich machen: Im Ansauglufttemperaturfeld von -30°C bis +50°C ist die maximale absolute Luftfeuchtigkeit stark mit der Lufttemperatur ge-koppelt. Durch Wahl einer mittleren relativen Feuchte, gelingt es, das Problem auf die Anpassung der verbliebenen Parameter zu reduzieren. Die Abweichung einer berechneten Größe. Einlaßtemperatur Tein, in der die Effekte der Ansauglufttemperatur Tans und der Motortemperatur Tmotor zusammengefaßt sind, von der Temperatur TBEZUG, bei der das Kennfeld aufgenommmen wurde, verstärkt sich im Verlauf von Kompression und Verbrennung um den Faktor FT0_TV (Gl. 2).

Fig. 2: Als Alternative zu den Formeln (Gl. 1,2) kommt die Verwendung eines Kennfeldes über der Eingangstemperatur Tein und dem Wasserdampfgehalt der Ansaugluft für den Faktor zur Multiplikation mit den NOx-Kennfelddaten oder die Multiplikation mit zwei Kennlinien, eine für Tein und eine zweite für den Wasserdampfgehalt der Ansaugluft, in Betracht. Block 2.1 repräsentiert ein Kennfeld, das über Motorbetriebsgrößen wie Last und Drehzahl adressiert wird und daß einen ersten Wert für den NOx-Massenstrom vor dem Katalysator liefert. Die Blöcke 2.2 und 2.3 repräsentieren Kennlinien für Korrekturen des Temperatureinflusses (gebildet unter Verwendung von Werten für die Motoröl- und die Ansauglufttemperatur) und des Einflusses des Wasserdampfgehaltes der Ansaugluft (absolute Feuchte), die in einem Block 2.4 miteinander und in einem Block 2.5 mit dem Ausgangswert des Kennfeldes 2.1 verknüpft werden.

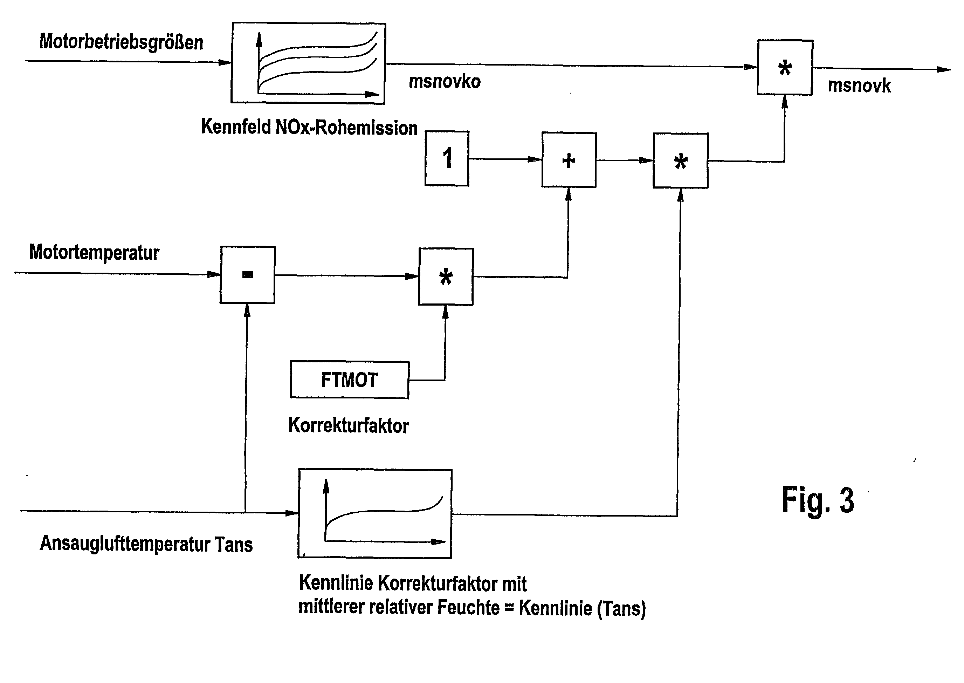

Fig. 3: Für den Fall, daß der Wasserdampfgehalt nicht gemessen wird, kann man eine Kennlinie über Tans verwenden, bei deren Ermittlung die relative Feuchte mit einem mittleren Wert von z. B. 0.5 angenommen wurde, und den Einfluß der Motortemperatur durch Multiplikation mit einem einfach strukturierten Faktor (Gl. 3) berücksichtigen (Fig. 3), bei dessen Ableitung die Linearisierbarkeit von Gl. 1 genutzt wird.

$$(3) \quad msnovk = msnovk0 * Kennlinie(Tans) * (1 + FTMOT*(Tmotor-Tans) )$$

**4**

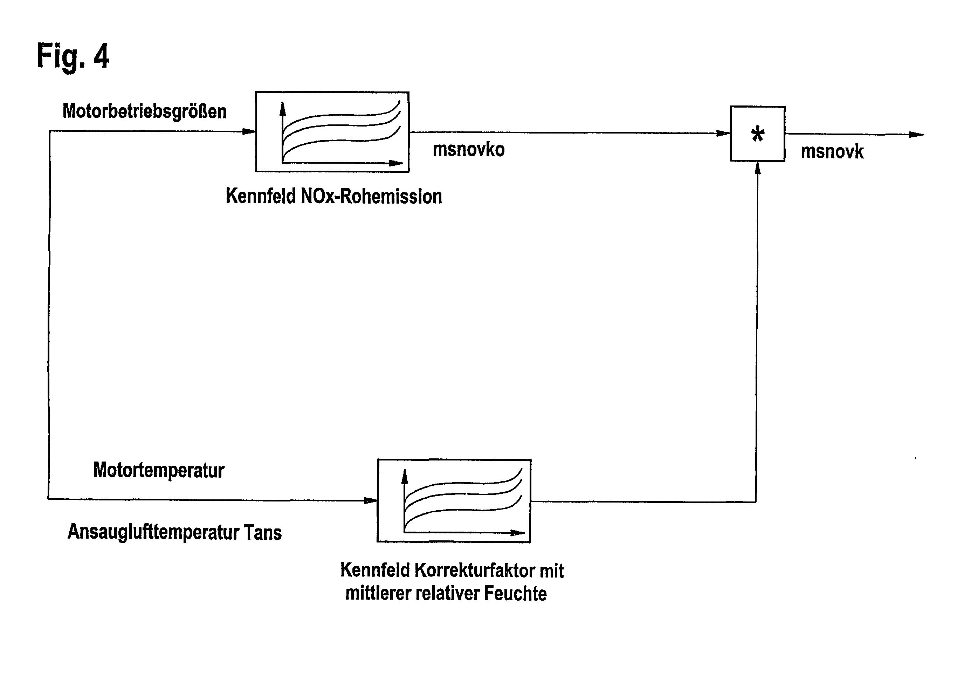

Fig. 3 zeigt eine Funktionsblockdarstellung dieser Berechnung. Die Verwendung einer Kennlinie als Funktion von Tein empfiehlt sich hier nicht, weil die Motortemperatur keinerlei Einfluß auf den Luftfeuchtigkeitseffekt besitzt.Der Faktor FTMOT enthält den anteiligen Einfluß der Motortemperatur auf Tein, dessen Verstärkung in der Kompressionsphase, und einen Faktor für die NOx-Bildungsaktivierung FNOXBAKT (Vorschlag : FTMOT = 0.001/K). Eine Zusammenfassung der Einflußgrößen von Fig. 3 in einem Kennfeld ist in Fig. 4 wiedergegeben.

Eine Erweiterung des vorhandenen NOx-Emissions-Kennfeldes in zwei oder drei weitere Dimensionen ist zwar denkbar, kommt aber wegen Speicherplatz- und Rechenzeitproblemen nicht in Betracht.

## Patentansprüche

1. Verfahren zur Bestimmung des NOx-Massenstroms (msnovK) am Eingang eines Katalysators (15) im Abgas eines Verbrennungsmotors aus Betriebsparametern, welche die Ansauglufttemperatur und die Motortemperatur enthalten, wobei der Wasserdampfanteil der Ansaugluft berücksichtigt wird, **dadurch gekennzeichnet, dass** der Wasserdampfanteil aus der Ansauglufttemperatur ermittelt wird.

2. Verfahren nach Anspruch 1, **dadurch gekennzeichnet, dass** der NOx-Massenstrom (msnovK) vor dem Katalysator (15) berechnet wird als Produkt aus einem temperaturabhängigen Grundwert (msnovK0) und einem temperaturabhängigen Faktor (exp (FNOXBAKT*delTemv)).

3. Verfahren nach Anspruch 2, **dadurch gekennzeichnet, dass** der temperaturabhängige Faktor zu einer Änderung (delTemv) der Verbrennungstemperatur als Folge von Änderungen einer Einlasstemperaturgröße (Tein), kombiniert aus Luft- und Motortemperatur, proportional ist.

4. Verfahren nach einem der Ansprüche 1 bis 3, **dadurch gekennzeichnet, dass** die Bestimmung des NOx-Massenstroms vor dem Katalysator (15) bei einem Verbrennungsmotor, der in einer ersten Betriebsart mit geschichteter Gemischverteilung im Brennraum (Schichtbetrieb) und in einer zweiten Betriebsart mit homogener Gemischverteilung im Brennraum (Homogenbetrieb) betrieben werden kann, im Schichtbetrieb anders erfolgt als im Homogenbetrieb.

5. Verfahren nach Anspruch 4, **dadurch gekennzeichnet, dass** im Homogenbetrieb zusätzlich ein Faktor für eine Lambda-abhängige NOx-Bildungsaktivierung berücksichtigt wird.

6. Verfahren nach einem der Ansprüche 1 bis 5, **dadurch gekennzeichnet, dass** ein steigender Wasserdampfanteil der Ansaugluft bei der Berechnung verkleinernd auf den NOx-Massenstrom vor dem Katalysator (15) wirkt.

7. Elektronische Steuereinrichtung zur Durchführung der Verfahren nach einem der Ansprüche 1 bis 6.

## Claims

1. Method for determining the NOx mass flow (msnovK) at the inlet of a catalytic converter (15) in the exhaust gas of an internal combustion engine from operating parameters which comprise the intake air temperature and the engine temperature, with the water vapour proportion of the intake air being taken into consideration, **characterized in that** the water vapour proportion is determined from the intake air temperature.

2. Method according to Claim 1, **characterized in that** the NOx mass flow (msnovK) upstream of the catalytic converter (15) is calculated as a product of a temperature-dependent base value (msnovK0) and a temperature-dependent factor (exp (FNOXBAKT*delTemv)).

3. Method according to Claim 2, **characterized in that** the temperature-dependent factor is proportional to a change (delTemv) in the combustion temperature as a result of changes in an inlet temperature value (Tein) combined from the air and engine temperatures.

4. Method according to one of Claims 1 to 3, **characterized in that,** in the case of an internal combustion engine which can be operated in a first operating mode with stratified mixture distribution in the combustion chamber (stratified mode) and in a second operating mode with homogeneous mixture distribution in the combustion chamber (homogeneous mode), the determination of the NOx mass flow upstream of the catalytic converter (15) takes place differently in the stratified mode than in the homogeneous mode.

5. Method according to Claim 4, **characterized in that** a factor for a lambda-dependent NOx formation activation is additionally taken into consideration in the homogeneous mode.

6. Method according to one of Claims 1 to 5, **characterized in that,** in the calculation, an increasing water vapour proportion of the intake air acts so as to decrease the NOx mass flow upstream of the catalytic converter (15).

7. Electronic control device for carrying out the method according to one of Claims 1 to 6.

**Revendications**

1. Procédé permettant de déterminer le débit massique de NOx (msnovK) à l'entrée d'un catalyseur (15) dans les gaz d'échappement d'un moteur à combustion interne à partir de paramètres de fonctionnement qui incluent la température de l'air d'admission et la température du moteur, la proportion de vapeur d'eau de l'air d'admission étant prise en compte, **caractérisé en ce que** la proportion de vapeur d'eau est déterminée à partir de la température de l'air d'admission.

2. Procédé selon la revendication 1, **caractérisé en ce que** le débit massique de NOx (msnovK) avant le catalyseur (15) est calculé en tant que produit d'une valeur de base dépendant de la température (msnovK0) et d'un facteur dépendant de la température (exp (FNOXBAKT*delTemv)).

3. Procédé selon la revendication 2, **caractérisé en ce que** le facteur dépendant de la température est proportionnel à une variation (delTemv) de la température de combustion due à des variations d'une valeur de température d'entrée (Tein), combinée à la température de l'air et du moteur.

4. Procédé selon l'une quelconque des revendications 1 à 3, **caractérisé en ce que** la détermination du débit massique de NOx avant le catalyseur (15), dans le cas d'un moteur à combustion interne qui peut fonctionner dans un premier mode de fonctionnement avec une distribution de mélange stratifiée dans la chambre de combustion (mode stratifié) et dans un deuxième mode de fonctionnement avec une distribution de mélange homogène dans la chambre de combustion (mode homogène), s'effectue en mode stratifié de manière différente au mode homogène.

5. Procédé selon la revendication 4, **caractérisé en ce que** dans le mode homogène, on tient compte en outre d'un facteur pour une activation de formation de NOx dépendant de lambda.

6. Procédé selon l'une quelconque des revendications 1 à 5, **caractérisé en ce qu'**une proportion de vapeur d'eau croissante de l'air d'admission agit lors du calcul de manière à réduire le débit massique de NOx avant le catalyseur (15).

7. Dispositif de commande électronique pour mettre en oeuvre le procédé selon l'une quelconque des revendications 1 à 6.

**Fig. 1**

EP 1 317 616 B1

# Fig. 2

Motorbetriebsgrößen

Massenstrom NO vor Kat

2.5

Korr. Massenstrom NO vor Kat

2.1

Kennfeld NOx-Rohemission

Eingangstemperatur

2.2

2.4

Kennlinie Korrekturfaktor

Absolute Feuchte

2.3

Kennlinie Korrekturfaktor

EP 1 317 616 B1

Motorbetriebsgrößen

msnovko

Kennfeld NOx-Rohemission

1

msnovk

Motortemperatur

FTMOT

Korrekturfaktor

Ansauglufttemperatur Tans

Kennlinie Korrekturfaktor mit
mittlerer relativer Feuchte = Kennlinie (Tans)

Fig. 3

EP 1 317 616 B1

## Fig. 4

**Motorbetriebsgrößen**

**Kennfeld NOx-Rohemission**

msnovko

**\***

msnovk

**Motortemperatur**

**Ansauglufttemperatur Tans**

**Kennfeld Korrekturfaktor mit mittlerer relativer Feuchte**

EP 1 317 616 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19739848
- EP 0381236 A

- DE 19851990